**Europäisches Patentamt**

**European Patent Office**

**Office européen des brevets**

(19)

(11) Veröffentlichungsnummer: **0 012 720
B1**

(12) ## EUROPÄISCHE PATENTSCHRIFT

(45) Veröffentlichungstag der Patentschrift:
**27.01.82**

(21) Anmeldenummer: **79810172.1**

(22) Anmeldetag: **03.12.79**

(51) Int. Cl.³: **C 09 B 67/00,** C 09 B 67/22,
C 08 J 3/22, C 09 C 3/08,
C 09 C 3/10

(54) **Verfahren zur Herstellung von Farbkörperpräparaten.**

(30) Priorität: **07.12.78 CH 12520/78**

(43) Veröffentlichungstag der Anmeldung:
**25.06.80 Patentblatt 80/13**

(45) Bekanntmachung des Hinweises auf die Patenterteilung:
**27.01.82 Patentblatt 82/4**

(84) Benannte Vertragsstaaten:
**BE CH DE FR GB IT NL**

(56) Entgegenhaltungen:
**AT-B-233 699
CH-A-308 532
DE-A-1 937 832
DE-A-2 019 203
DE-A-2 019 230
DE-A-2 360 093
DE-A-2 732 710
GB-A-1 490 320
HANS KITTEL »Pigmente«, 3. Auflage, 1960,
WISSENSCHAFTLICHE VERLAGSGESELL-
SCHAFT MBH, Stuttgart, Seiten 569—578**

(73) Patentinhaber: **CIBA-GEIGY AG, Patentabteilung
Postfach, CH-4002 Basel (CH)**

(72) Erfinder: **Riegler, Albert, Kleinhuningerstrasse 192,
4057 Basel (CH)**

Verfahren zur Herstellung von Farbkörperpräparaten

Es ist bekannt, Pigmente durch sogenanntes Flushen in Präparate zu überführen. Dabei wird — meist in einem Kneter — eine wäßrige Pigmentpaste mit einem wasserabstoßenden Träger vermischt, bis das Pigment von der wäßrigen Phase in die organische Phase des Trägers hinübergewechselt ist. Das pigmentfreie Wasser wird dann abgeschieden und der pigmenthaltige Träger aufgearbeitet.

Als wasserabstoßende Träger werden gewöhnlich wasserunlösliche organische Lösungsmittel und Weichmacher oder organische Lösungen oder Schmelzen von Harzen und Kunststoffen verwendet.

In der CH-A-482 812 wird ein Verfahren zur Herstellung einer trockenen Pigmentpräparation beschrieben, indem ein Pigment ohne Mitverwendung von Lösungsmitteln in ein Trägermaterial aus einem Dreierpolymerisat aus Vinylchlorid, Vinylacetat und Dicarbonsäure und einem Zweierpolymerisat aus Vinylchlorid und Vinylacetat bei einer Temperatur zwischen etwa 110 und 160°C in einem Knetwerk oder Walzenstuhl eingearbeitet wird. Nach homogener Verteilung des Pigments in das Trägermaterial läßt man die Knetmasse erkalten und bricht das erstarrte Material, wozu ein beträchtlicher Energieaufwand erforderlich ist.

Auch beim Verfahren der CH-A-522 025, welches die Einwirkung von scherenden Kräften auf ein Gemisch aus wäßrigem Pigmentpreßgut, Polyäthylen und einem Fettsäureamid bei 80 bis 95°C bis zur Verdampfung des Wassers vorsieht, läßt man die Masse erkalten und bricht dann die erstarrte Masse, bevor sie granuliert wird.

Es wurde nun ein Verfahren zur Herstellung eines Farbkörperpräparats durch Einarbeiten des Farbkörpers in die Schmelze eines polymeren oder monomeren organischen Materials gefunden, welches dadurch gekennzeichnet ist, daß man in einem Kneter den Farbkörper mit dem organischen Material auf dessen Schmelztemperatur erwärmt und die Schmelze in Gegenwart von Wasser im laufenden Kneter unter Zerkleinerung abkühlen und erstarren läßt. Das Verfahren läßt sich auch auf monomeres organisches Material anwenden, wie z. B. auf feste Weichmacher, z. B. aus der Klasse der Benzoesäurederivate. Bevorzugt ist jedoch ein polymeres organisches Material, da hier der technische Vorteil — geringe Energieaufnahme beim Erstarrenlassen der Schmelze im laufenden Kneter — ganz besonders ins Gewicht fällt.

Vorteilhaft wird nach diesem Verfahren eine wäßrige Pigmentpaste mit dem vorzugsweise polymeren organischen Material auf dessen Schmelztemperatur erwärmt und die Schmelze nach dem Übertritt des Pigments von der wäßrigen in die organische Phase im laufenden Kneter und in Gegenwart des Wassers unter Zerkleinerung der Schmelze abkühlen und erstarren gelassen.

Gegebenenfalls kann ein Farbkörper in trockener Form eingesetzt werden. In einem solchen Falle wird der Schmelze des Trägerharzes vor oder nach dem Eintragen des trockenen Farbkörpers Wasser zugegeben. Gegebenenfalls kann durch Zugabe von Eis der Abkühl- und Granulierprozeß noch beschleunigt werden. Man kann aber auch den trockenen Farbkörper zuerst mit Wasser anpasten, was z. B. bei der Verwendung von Ruß als Farbkörper von Vorteil sein kann. Durch die Zerkleinerung der Schmelze in Gegenwart von Wasser nimmt der Kneter bedeutend weniger Energie auf, und die erhaltenen stückigen Granulate lassen sich außerdem einfach und mühelos aus der Maschine ausladen und aufarbeiten.

Als Trägerharz verwendet man vorzugsweise ein polymeres organisches Material mit einem Erweichungspunkt zwischen 60 und 100°C, insbesondere zwischen 75 und 90°C. Als solches Material kommen grundsätzlich alle hydrophoben thermoplastischen Harze und Kunststoffe der verschiedensten chemischen Klassen in Frage, insbesondere alle Kohlenwasserstoffharze, wie z. B. Petroharze, aromatische, aliphatische, alkylaromatische und cycloaliphatische Kohlenwasserstoffharze, Polyisobutylene, Polybutylene, Polybutadiene und Polypentadiene. Ausgezeichnete Trägerharze sind z. B. Polyäthylenwachse und Polypropylenwachse, ebenso Oxazolinwachse, insbesondere aber Äthylen-Vinylacetat-Copolymere, bevorzugt solche mit einem Vinylacetatanteil von 5 bis 45, insbesondere von 5 – 30 Gew.-%. Die Äthylen-Vinylacetat-Copolymere können auch in Mischung mit anderen Stoffen, beispielsweise mit Polyolefinwachs und/oder einer Metallseife verwendet werden.

Es können auch höher als 100°C schmelzende Harze verwendet werden, wenn in einem druckfesten Kneter, wie beispielsweise vom Typ Banbury, gearbeitet wird. Schließlich kann auch durch Mischen verschiedener Trägermaterialien der Schmelzbereich beeinflußt werden, so daß Komponenten, die höher als 100°C schmelzen, im Gemisch mit anderen Komponenten auch in gewöhnlichen Knetern verarbeitet werden können, wenn das Gemisch den erforderlichen niedrigeren Schmelzbereich aufweist.

Der Farbkörpergehalt der erfindungsgemäß erhaltenen Präparate liegt zwischen 10 und 90 Gew.-%, vorzugsweise zwischen 30 und 70 Gew.-%.

Im Gegensatz zu den bekannten Schmelz-Knet- und Schmelz-Flush-Prozessen, bei denen die getrocknete und erstarrte Schmelze gebrochen werden muß, wird nach dem erfindungsgemäßen Verfahren durch Abkühlen der Masse in der laufenden Maschine und in Gegenwart von Wasser die Möglichkeit gegeben, solche Prozesse in normalen Muldenknetern ausführen zu können, ohne auf schwere Maschinen angewiesen zu sein. Das bedeutet unter anderem eine Herabsetzung der Investitions-, Wartungs- und Unterhaltskosten sowie eine Einsparung an Energie. Als Farbkörper können alle Pigmente und polymerlöslichen Farbkörper verwendet werden, aber auch wasserunlösliche Füllstoffe und Zusatzmittel, wie z. B. optische Aufheller mit Pigmentcharakter.

Für das erfindungsgemäße Verfahren eignen sich insbesondere organische und anorganische Pigmente als trockene Pulver oder vorzugsweise als wäßrige Filterkuchen, wie sie bei der Synthese und/oder nach einer Konditionierung oder Mahlung anfallen.

Als anorganische Pigmente kommen beispielsweise in Betracht: Titandioxid, Eisenoxide, Chromoxid- und Chromatpigmente wie Chromoxidgrün und Bleichromatgelb und -rot, Molybdatorange, Cadmiumsulfide und -sulfoselenide, Ultramarine und Nickeltitanatgelb. Als organische Pigmente können Ruße, Azo-, Methin-, Azomethin-, Phthalocyanin-, Nitro-, Anthrachinon-, Perinon-, Perylentetracarbonsäurederivat-, Dioxazin-, Thioindigo-, Iminoisoindolinon- und -indolin-, Chinophthalon-, Chinacridon- oder Metallkomplexpigmente, beispielsweise von Methin- oder Azomethinfarbstoffen, sowie Gemische verschiedener Pigmente verwendet werden.

Als in der Polymerschmelze lösliche Farbkörper kommen insbesondere solche in Betracht, die in einer Polyamid-, Polyester-, Polycarbonat- oder Polyolefinschmelze löslich sind und die den verschiedensten chemischen Klassen angehören können. Als solche werden beispielsweise genannt, gewisse Metallkomplexe von Azofarbstoffen, insbesondere 1 : 2-Metallkomplexe von Monoazofarbstoffen sowie Amino- oder Acylaminoanthrachinone, Phthalocyanine, Chinacridone, 2,4-Di-(2'-hydroxynaphthyl)-6-pyrenyl-1,3,5-triazin, wie auch einzelne Küpenfarbstoffe, wie Perylentetracarbonsäurediimide oder Anthrimidcarbazole.

Nach Beendigung des Knetprozesses liegt die gefärbte und erstarrte Schmelze als feuchtes, unregelmäßig geformtes Bruchgranulat vor, welches sich leicht ausladen läßt. Das feuchte stückige Granulat wird getrocknet und zerkleinert. Die Trocknung kann vor oder nach dem Zerkleinern geschehen. Geeignete Zerkleinerungsmaschinen sind z. B. Schneidemühlen. Es fällt ein körniges Produkt an, das z. B. direkt als Farbkörperpräparat verwendet werden kann. Gegebenenfalls wird es z. B. auf einer Querstrommühle zu Pulver gemahlen.

Die Produkte können aber auch zu zylindrischen oder quadrischen Granulaten umgeschmolzen werden.

Das Präparat eignet sich je nach Wahl des Trägerstoffs zum Einfärben von hochmolekularem Material in der Masse, z. B. für Anstrichstoffe, Druckfarben, Spinnfasern, Kunststoffe mit oder ohne Lösungsmittel. Als besonders vorteilhaft erweisen sie sich jedoch zum Pigmentieren von Thermoplasten in Form von Fasern, Folien, Spritzgußmaterial oder Profilen, beispielsweise von Polyolefinen, wie Polyäthylen oder Polypropylen, ferner Polyvinylchlorid, ABS, Polystyrol. Die erhaltenen Präparate können telquel zum Pigmentieren verwendet werden. Sie eignen sich aber auch hervorragend zur Herstellung von sogenannten Masterbatches, beispielsweise unter gleichzeitiger Herabsetzung des Farbkörpergehalts mittels Innenknetern oder kontinuierlicher Knetmaschine, wobei auch Nuancenmischungen hergestellt werden können.

In den nachfolgenden Beispielen bedeuten die Teile Gewichtsteile.

## Beispiele

### Beispiel 1

325 Teile einer wäßrigen Paste, enthaltend 78 Teile C.I. Pigment Rot 144, werden mit 52 Teilen eines mit Vinylacetat modifizierten Polyäthylens mit einem MFI-Wert von 425 g/10 Min. (z. B. Ultrathene® UE 649-04, Erweichungspunkt 80°C, Hersteller U.S.I.) im Labor-Muldenkneter bei 110°C einem Flushprozeß unterworfen. Nach Beendigung des Flushprozesses wird die Knetmasse (Schmelze) im laufenden Kneter in Anwesenheit des klar abgetrennten Wassers während des Abkühlens zerkleinert. Das feuchte, unregelmäßige Bruchgranulat ($\varnothing$ ca. $\leq$1 cm) wird ausgeladen und auf einer Schneidmühle zu feinem Granulat gemahlen ($\varnothing$ ca. $\leq$4 mm). Das Produkt wird getrocknet. Man erhält ein 60% Pigment enthaltendes rotes Präparat, welches sich zur einfachen Herstellung von Pigmentkonzentraten z. B. für PE, PP, PS (Masterbatches) mit einem Innenkneter oder einer kontinuierlichen Knetmaschine eignet.

### Beispiel 2

360 Teile einer wäßrigen Paste, enthaltend 120 Teile C.I. Pigment Blau 15 : 3, werden mit 180 Teilen eines mit Vinylacetat modifizierten Polyäthylens mit einem MFI-Wert von 150 g/10 Min. (z. B. Elvax® 420, Erweichungspunkt 88°C, Hersteller Du Pont) im Labor-Muldenkneter bei 110°C einem Flushprozeß unterworfen. Nach Beendigung des Flushprozesses wird die Knetmasse (Schmelze) im laufenden Kneter in Anwesenheit des klar abgetrennten Wassers während des Abkühlens zerkleinert. Das feuchte, unregelmäßige, Bruchgranulat ($\varnothing$ ca. $\leq$1 cm) wird ausgeladen und auf einer Schneidmühle zu feinem Granulat gemahlen ($\varnothing$ ca. $\leq$4 mm). Das Produkt wird getrocknet. Man erhält ein 40% Pigment enthaltendes blaues Präparat, welches sich zum direkten Einfärben durch Mischen mit dem farblosen, thermoplastischen Kunststoff, z. B. PE, PP, PS, PVC, PA-6 eignet.

## Beispiel 3

227 Teile einer wäßrigen Paste, enthaltend 65 Teile C.I. Pigment Rot 48 : 2, werden mit 65 Teilen eines mit Vinylacetat modifizierten Polyäthylens mit einem MFI-Wert von 150 g/10 Min. (z. B. Elvax® 420, Hersteller DuPont) im Labor-Muldenkneter bei 110°C einem Flushprozeß unterworfen. Nach Beendigung des Flushprozesses wird die Knetmasse (Schmelze) im laufenden Kneter in Anwesenheit des klar abgetrennten Wassers während des Abkühlens zerkleinert. Das feuchte, unregelmäßige Bruchgranulat (∅ ca. ≤1 cm) wird ausgeladen und auf einer Schneidmühle zu feinem Granulat gemahlen (∅ ca. ≤4 mm). Das Produkt wird getrocknet. Man erhält ein 50% Pigment enthaltendes rotes Präparat, welches sich zum direkten Einfärben durch Mischen mit dem farblosen, thermoplastischen Kunststoff, z. B. PE, PP, PS, PVC eignet.

## Beispiel 4

78 Teile eines mit Vinylacetat modifizierten Polyäthylens mit einem MFI-Wert von 150 g/ 10 Min. (z. B. Elvax® 420, Hersteller DuPont) werden im Labor-Muldenkneter bei 110°C geschmolzen. In die Schmelze werden 52 Teile C.I. Pigment Schwarz 7 gleichmäßig eingetragen und nach 1/4 Std. 30 Teile Wasser zugegeben. Während des nachfolgenden Abkühlens wird die Knetmasse im laufenden Kneter zerkleinert. Das feuchte, unregelmäßige Bruchgranulat (∅ ca. ≤1 cm) wird ausgeladen und auf einer Schneidmühle zu feinem Granulat gemahlen (∅ ca. ≤4 mm). Das Produkt wird getrocknet. Man erhält ein 40% Pigment enthaltendes schwarzes Präparat, welches sich zum direkten Einfärben durch Mischen mit dem farblosen, thermoplastischen Kunststoff, z. B. PE, PP, PS, PVC, PA-6 eignet.

## Beispiel 5

Arbeitet man gemäß Beispiel 4 und nimmt anstelle von C.I. Pigment Schwarz 7 C.I. Pigment Rot 108, so erhält man ein gleich gutes Präparat, welches zum Einfärben von PE, PP, PVC und ABS geeignet ist.

## Beispiel 6

39 Teile eines mit Vinylacetat modifizierten Polyäthylens mit einem MFI-Wert von 500 g/ 10 Min. (z. B. Elvax® 410, Erweichungspunkt 88°C, Hersteller DuPont) werden im Labor-Muldenkneter bei 110°C geschmolzen. In die Schmelze werden 91 Teile C.I. Pigment Rot 101 gleichmäßig eingetragen und nach 1/4 Std. 30 Teile Wasser zugegeben. Während des nachfolgenden Abkühlens wird die Knetmasse im laufenden Kneter zerkleinert. Das feuchte, unregelmäßige Bruchgranulat (∅ ca. ≤1 cm) wird ausgeladen und auf einer Schneidmühle zu feinem Granulat gemahlen (∅ ca. ≤4 mm). Das Produkt wird getrocknet. Man erhält ein 70% Pigment enthaltendes braunes Präparat, welches sich zum direkten Einfärben durch Mischen mit dem farblosen, thermoplastischen Kunststoff, z. B. PE, PP, PS, PVC eignet.

## Beispiel 7

236 Teile einer wäßrigen Paste, enthaltend 52 Teile C.I. Pigment Gelb 93, werden mit 39 Teilen eines mit Vinylacetat modifizierten Polyäthylens mit einem MFI-Wert von 150 g/10 Min. (z. B. Elvax® 420, Hersteller DuPont) und 39 Teilen Polyäthylenwachs (z. B. AL-61-Wachs, Hersteller BASF) im Labor-Muldenkneter bei 110°C einem Flushprozeß unterworfen. Nach Beendigung des Flushprozesses wird die Knetmasse (Schmelze) im laufenden Kneter in Anwesenheit des klar abgetrennten Wassers während des Abkühlens zerkleinert. Das ziemlich feine Bruchgranulat (∅ ca. ≤5 mm) wird ausgeladen und getrocknet. Man erhält ein 40% Pigment enthaltendes gelbes Präparat, welches sich zum direkten Einfärben durch Mischen mit dem farblosen thermoplastischen Kunststoff, z. B. PE, PP, PS, PVC eignet.

## Beispiel 8

235 Teile einer wäßrigen Paste, enthaltend 65 Teile C.I. Pigment Rot 166, werden mit 45,5 Teilen Magnesium-Behenat und 19,5 Teilen eines mit Vinylacetat modifizierten Polyäthylens mit einem MFI-Wert von 150 g/10 Min. (z. B. Elvax® 420, Hersteller DuPont) im Labor-Muldenkneter bei 110°C einem Flushprozeß unterworfen. Nach Beendigung des Flushprozesses wird die Knetmasse (Schmelze) im laufenden Kneter in Anwesenheit des klar abgetrennten Wassers während des Abkühlens zerkleinert. Das ziemlich feine Bruchgranulat (∅ ca. ≤5 mm) wird ausgeladen und getrocknet. Man erhält ein 50% Pigment enthaltendes rotes Präparat, welches sich zum direkten Einfärben durch Mischen mit dem farblosen, thermoplastischen Kunststoff, z. B. Pe, PP, PS, PVC eignet.

## Beispiel 9

249 Teile einer wäßrigen Paste, enthaltend 78 Teile C.I. Pigment Blau 15 : 3, werden mit 52 Teilen eines sogenannten Permanentweichmachers (Elvaloy® 741, polymerer Weichmacher auf Grundlage eines Äthylenvinylacetat-Copolymerisates, Erweichungspunkt 83°C, der Firma DuPont) im Labor-Muldenkneter bei 125°C einem Flushprozeß unterworfen. Nach Beendigung des Flushprozesses wird die Knetmasse (Schmelze) im laufenden Kneter in Anwesenheit des klar abgeschiedenen Wassers und unter Zugabe von Eis während des Abkühlens zerkleinert. Das unregelmäßige Bruchgranulat wird nach dem Trocknen im Vakuumschrank bei 40–50°C mit Hilfe von Trockeneis auf einer Querstrommühle zu einem feinen Grieß gemahlen. Man erhält ein 40% Pigment enthaltendes blaues Präparat, welches sich hervorragend zum Pigmentieren von PVC eignet.

Beispiele 10–16

Nimmt man anstelle der in den Beispielen 1–9 erwähnten Trägerstoffe, z. B.

10. — ein Polyäthylen (z. B. HC-Polyäthylen 7A, Erweichungspunkt 90°C; 612A, Erweichungspunkt 90°C; 617A, Erweichungspunkt 82°C; der Firma Allied Chemical)
11. — ein Oxazolinwachs (z. B. Oxazolinwachs ES 254, Erweichungspunkt 72°C; der Firma Commercial Solvent Corporation)
12. — ein Polyamid (z. B. Vestamid® T 350A/P1, Erweichungspunkt 82°C; der Firma Chemische Werke Hüls)
13. — ein Sulfonamidharz (z. B. Demidal 70, Erweichungspunkt 70°C; der Firma Vereinigte Chemische Fabriken Kreidl, Rütter & Co.)
14. — einen festen Weichmacher (z. B. Benzoflex S 432, Erweichungspunkt 80°C; oder Benzoflex S 552, Erweichungspunkt 98°C; der Firma Velsicol Chem. Corp.)
15. — ein Polycaprolacton (z. B. PCL 700, Erweichungspunkt 70°C; der Firma Union Carbide)
16. — ein paraffinartiges Produkt (z. B. Sasolwachs HI, Erweichungspunkt 84°C, $C_{11}H_{24}$; der Firma VEBA Chemie)

läßt sich der erfindungsgemäße Flushprozeß ebenso problemlos und vorteilhaft durchführen, und man erhält Präparate mit guten Eigenschaften für die verschiedenen Applikationsmedien.

**Patentansprüche**

1. Verfahren zur Herstellung eines Präparates durch Einarbeiten eines Pigments oder eines polymerlöslichen Farbkörpers in die Schmelze eines polymeren oder monomeren organischen Materials, dadurch gekennzeichnet, daß man in einem Kneter das Pigment oder den polymerlöslichen Farbkörper mit dem organischen Material auf die Schmelztemperatur des organischen Materials erwärmt und die Schmelze in Gegenwart von Wasser im laufenden Kneter unter Zerkleinerung abkühlen und erstarren läßt.

2. Verfahren gemäß Anspruch 1, dadurch gekennzeichnet, daß das Pigment oder der polymerlösliche Farbkörper in Form einer wässerigen Paste eingebracht wird.

3. Verfahren gemäß Anspruch 1, dadurch gekennzeichnet, daß man das Pigment oder den polymerlöslichen Farbkörper in ein hydrophobes thermoplastisches Harz oder Kunststoff einarbeitet.

4. Verfahren gemäß Anspruch 3, dadurch gekennzeichnet, daß man das Pigment oder den polymerlöslichen Farbkörper in ein Kohlenwasserstoffharz einarbeitet.

5. Verfahren gemäß Anspruch 3, dadurch gekennzeichnet, daß man das Pigment oder den polymerlöslichen Farbkörper in ein Äthylen-Vinylacetat-Copolymeren einarbeitet.

6. Verfahren gemäß Anspruch 5, dadurch gekennzeichnet, daß man Äthylen-Vinylacetat-Copolymere mit einem Vinylacetatanteil von 5 bis 30 Gew.-% als Trägerharz verwendet.

7. Verfahren gemäß Anspruch 5, dadurch gekennzeichnet, daß man das Pigment oder den polymerlöslichen Farbkörper in ein Gemisch aus Äthylen-Vinylacetat-Copolymeren mit einem Polyolefinwachs und/oder einer Metallseife einarbeitet.

**Claims**

1. A process for the production of a colorant preparation by incorporating a pigment or a polymer-soluble colorant in the melt of an organic polymer or monomer, which process comprises heating said pigment or polymer-soluble colorant with the organic material to the melt temperature of this latter and allowing the melt, in the presence of water and which the kneader continuing its operation, to cool and solidify while comminuting it.

2. A process according to claim 1, wherein the pigment or the polymer-soluble colorant is incorporated in the form of an aqueous paste.

3. A process according to claim 1, wherein the pigment or the polymer-soluble colorant is incorporated in a hydrophobic thermoplastic resin or plastics material.

4. A process according to claim 3, wherein the pigment or the polymer-soluble colorant is incorporated in a hydrocarbon resin.

5. A process according to claim 3, wherein the pigment or the polymer-soluble colorant is incorporated in an ethylene/vinyl acetate copolymer.

6. A process according to claim 5, which comprises the use of an ethylene/vinyl acetate copolymer containing 5 to 30% by weight of vinyl acetate as carrier resin.

7. A process according to claim 5, wherein the pigment or the polymer-soluble colorant is incorporated in a mixture of an ethylene/vinyl acetate copolymer with a polyolefin wax and/or a metal soap.

**Revendications**

1. Procédé de préparation d'une composition par incorporation, dans une matière organique polymère ou monomère fondue, d'un pigment ou d'une matière colorante soluble dans un polymère, procédé caractérisé en ce qu'on chauffee le pigment, ou la matière colorante soluble dans un polymère, avec la matière organique, dans un malaxeur, à la température de fusion de la matière organique et on laisse la masse fondue se refroidir et se solidifier en présence d'eau, dans le malaxeur en fonctionnement, tout en la broyant.

2. Procédé selon la revendication 1, caractérisé en ce qu'on introduit le pigment, ou la matière colorante soluble dans un polymère, sous la forme d'une pâte aqueuse.

3. Procédé selon la revendication 1, caractérisé en ce qu'on introduit le pigment, ou la matière colorante soluble dans un polymère, dans une résine ou une matière thermoplastique hydrophobe.

4. Procédé selon la revendication 3, caractérisé en ce qu'on incorpore le pigment, ou la matière colorante soluble dans un polymère, dans une résine hydrocarbonée.

5. Procédé selon la revendication 3, caractérisé en ce qu'on incorpore le pigment, ou la matière colorante soluble dans un polymère, dans un copolymère d'éthylène et d'acétate de vinyle.

6. Procédé selon la revendication 5, caractérisé en ce qu'on utilise, comme résine support, un copolymère d'éthylène et d'acétate de vinyle dont la proportion d'acétate de vinyls est comprise entre 5 et 30% en poids.

7. Procédé selon la revendication 5, caractérisé en ce qu'on incorpore le pigment, ou la matière colorante soluble dans un polymère, dans un mélange d'un copolymère de l'éthylène et de l'acétate de vinyle avec une cire de polyoléfine et/ou un savon métallique.